# EUROPEAN PATENT SPECIFICATION

(11) **EP 3 267 024 B1**
(45) Date of publication and mention of the grant of the patent: **16.10.2019**
(21) Application number: 17179539.6
(22) Date of filing: 04.07.2017
(51) Int. Cl.: F02K 9/64

(54) **ROCKET ENGINE**
RAKETENMOTOR
MOTEUR DE FUSÉE

(30) Priority: 07.07.2016 DE 102016212399
(43) Date of publication of application: 10.01.2018
(73) Proprietor: ArianeGroup GmbH, 82024 Taufkirchen (DE)
(72) Inventor: BEHR, Roland, 83607 Holzkirchen (DE); IVANCIC, Blazenko, 85521 Riemerling (DE); WIEDMANN, Dietmar, 83064 Raubling (DE); RIEDMANN, Hendrik, 85640 Putzbrunn (DE)
(74) Representative: Katérle, Axel

(56) References cited:
- EP-A1- 0 530 721
- WO-A1-02/055860
- WO-A1-2008/010748
- DE-A1- 3 011 282
- US-A- 3 724 048
- US-A- 5 501 011

## Description

The present disclosure concerns a rocket engine, in particular a rocket engine for spacecraft.

In liquid-propellant rocket engines known from the prior art, propellant is supplied by means of a propellant feeding system from propellant tanks to a thrust chamber which is composed substantially of a combustion chamber and a (expansion) nozzle. As propellant, use may be made for example of hydrogen, kerosine or hydrazine, which, together with an oxidising agent, for example liquid oxygen or nitrogen tetroxide, is injected into the combustion chamber in order to burn therein. The exhaust gases thereby produced expand from the combustion chamber through the nozzle into the environment, whereby the rocket engine generates a thrust which acts opposite the direction of expansion of the exhaust gas.

During the combustion process the temperatures in the combustion chamber may reach more than 3000°C. To enable the thrust chamber, especially the combustion chamber, to withstand these temperatures, the wall of the combustion chamber is usually cooled by means of a coolant flowing through a conduit system. For example, in the so-called bypass flow method, the propellant (e.g. liquid hydrogen), before being supplied into the combustion chamber, can be led through channels formed in the combustion chamber wall, where a heat exchange between the cooling medium and the combustion chamber wall takes place. Example embodiments of a combustion chamber, which has cooling channels through which a cooling medium flows, are described in the documents DE 103 43 049 B3 and US 2010/0229389 A1.

Further, document US 3 724 048 A describes a regeneratively cooled rocket engine thrust chamber having a first thrust chamber wall, a second thrust chamber wall, a liquid coolant feed manifold, a liquid coolant discharge manifold, liquid coolant passages, and liquid coolant passage side walls. A plurality of apertures is arranged between adjacent liquid coolant passages in the side walls, thereby forming a bypass manifold together with a first thrust chamber wall.

Document US 5 501 011 A merely describes a thrust chamber of a rocket engine in which an internal portion of the combustion chamber which comes into contact with the hot gas flow comprises a porous wall. A hydraulic calibration sheet made of a material that is proof to the cooling fluid is constituted by a metal foil, and is perforated by a multiplicity of microperforations distributed over the entire area of the sheath.

Document WO 2008/010748 A1 describes a method for manufacturing a wall structure forming a rocket engine member for a thrust chamber. In the method, a surface of a sheet work-piece is machined so that an inner wall is formed with circumferentially spaced elongated webs projecting from the inner wall at right angles to the wall. A tubular outer wall is positioned around the inner wall and thereafter joined to the edges of the webs by welding from an outer side of the outer wall relative to the cooling. The ends of intermediate webs are machined so that the ends are chamfered.

In document WO 02/055860 A1, an outlet nozzle for a rocket engine is described to comprise three longitudinally arranged sections, wherein the nozzle wall of each section is a structure comprising a plurality of mutually adjacent, tubular cooling channels helically extending substantially in parallel to each other from the inlet end of the section to its outlet end. The tubes are welded to each other at the outside by laser welding, and tubes in adjacent sections are oriented so that there is a shift between a positive and a negative channel angle in the transition from one section to an adjacent section for reduced roll momentum.

Against this background it is an object of the present invention to provide a rocket engine which can be produced comparatively simply and ensures efficient cooling of the thrust chamber wall.

In this regard, there is proposed a rocket engine which has a thrust chamber bounded by a casing construction with a chamber longitudinal axis. The casing construction includes at least one cooling channel in fluidic connection with a source of a cooling medium. The cooling channel is traversed by a plurality of bridge elements, around which the cooling medium flows and which each extend only over a part of the length of the cooling channel measured along the chamber longitudinal axis, and which connect two casing wall pieces, bounding the cooling channel on the inside and on the outside of the casing construction, to one another. The cooling channel and also the casing construction with the casing wall pieces bounding the cooling channel may be configured, for example, cylindrically symmetric.

On the inside and on the outside in this context refers to a radial direction to the chamber longitudinal axis of the thrust chamber. The radial distance between the chamber longitudinal axis and the material wall piece bounding the cooling channel on the inside is thus less than the radial distance between the chamber longitudinal axis and the material wall piece bounding the cooling channel on the outside.

The cooling channel may extend substantially over the entire axial length of the thrust chamber or only over a part of the axial length of the thrust chamber. In particular, provision may be made for the cooling channel to be situated in the region of the combustion space and/or in the region of the nozzle.

In certain embodiments the cooling channel has an inlet and an outlet for the cooling medium, through which the cooling medium can flow into and out of the cooling channel, respectively. The inlet may, for example, be fluidically coupled to an inlet distributor. The inlet and/or the outlet is preferably arranged at at least one end of the cooling channel in the chamber longitudinal direction. For example, the inlet and/or the outlet may be arranged at the end of the nozzle facing away from the combustion chamber or at the end of the combustion chamber facing away from the nozzle.

It was stated that the bridge elements extend only over a part, in particular a minor part, of the length of the cooling channel measured along the chamber longitudinal axis. In other words, the bridge elements are shorter than the cooling channel if one considers the extent of the cooling channel in the direction from an injection end of the thrust chamber at which propellant is injected into a combustion space of the thrust chamber to an exhaust gas outlet end of the thrust chamber at which the exhaust gases resulting from the combustion of the propellant are discharged from the thrust chamber nozzle. This direction of extension of the cooling channel runs in a viewing direction from radially outside onto the thrust chamber along the chamber longitudinal direction, even if, on viewing in an axial longitudinal section containing the chamber longitudinal axis, the casing construction does not extend parallel or parallel all over to the chamber longitudinal axis (for example, the casing construction on viewing in such an axial longitudinal section runs in the region of the nozzle obliquely to the chamber longitudinal axis). In certain embodiments the longitudinal extent of the bridge elements (measured along the chamber longitudinal axis) is substantially smaller than the length of the cooling channel and is for example at most 20% or at most 15% or at most 10% or at most 5% or at most 3% or at most 1% of the length of the cooling channel. Alternatively, the longitudinal extent of the bridge elements (measured along the chamber longitudinal axis) may be at least 20% or at least 15% or at least 10% or at least 5% or at least 3% or at least 1% of the length of the cooling channel.

In one embodiment, at least a partial number of the bridge elements are of different shape or/and of different size. Alternatively, all the bridge elements may be of the same shape and of the same size.

With regard to the distribution pattern of the bridge elements in the chamber longitudinal direction and in the chamber circumferential direction, it is the case in certain embodiments that at least a partial number of the bridge elements are arranged with - referring to a circumferential direction of the thrust chamber - mutual angular offset and with - referring to the chamber longitudinal axis - mutual longitudinal offset, in the cooling channel. For example, the bridge elements may be distributed over a plurality of axially successive circumferential lines (in particular annular lines), wherein for at least a partial number of paired axially adjacent circumferential lines the bridge elements of the one circumferential line of the pair are arranged angularly offset with respect to the bridge elements of the other circumferential line of the pair. Alternatively or additionally, for at least a partial number of paired axially adjacent circumferential lines the bridge elements of the one circumferential line of the pair are arranged with the same angular position with respect to the bridge elements of the other circumferential line of the pair. The number of bridge elements per circumferential line as well as the number of axially successive circumferential lines will be suitably specified depending on the stability requirements.

In certain embodiments the two casing wall pieces are formed of annular wall parts arranged concentrically within one another and separated from one another by a radial annular space. In the annular circumferential direction in these embodiments, provision is made for either a plurality of cooling channels which are arranged distributed and each extend only over a part of the annular circumference and each are supplied with cooling medium from the source, or a single cooling channel extending over the entire annular circumference. In the first case, each of the plurality of cooling channels has in the annular circumferential direction, for example, an angular width of at least 30 degrees or at least 60 degrees or at least 72 degrees or at least 90 degrees or at least 120 degrees or at least 150 degrees or at least 180 degrees.

In certain embodiments, at least a partial number of the bridge elements are implemented as bridge webs which are longer than they are wide when viewed in a sectional area oriented along the casing wall pieces. Preferably, the bridge webs are formed such that they have a first dimension (length) in the chamber longitudinal direction and a second dimension (width) perpendicular to the chamber longitudinal direction, for example in the sectional area oriented along the casing wall pieces, wherein the first dimension is larger than the second dimension. For example, the first dimension may be twice or four times as large as the second dimension. It is conceivable that the bridge webs are longer then they are wide, wherein, when viewed in the sectional area, the length of the bridge webs is measured in a main flow direction of the cooling medium upstream of the bridge webs and the width of the bridge webs is measured perpendicularly to the main flow direction. When viewed in the sectional area, the length of the bridge webs may be measured in parallel to the chamber longitudinal axis and the width of the bridge webs may be measured perpendicularly to the chamber longitudinal axis, e.g., along one of the casing wall pieces.

At least a partial number of the bridge webs may be oriented - when viewed in the sectional area oriented along the casing wall pieces - with their web longitudinal direction parallel to the chamber longitudinal axis. Alternatively or additionally, at least a partial number of the bridge webs - likewise when viewed in the sectional area - may be oriented with their web longitudinal direction at an acute angle obliquely with respect to the chamber longitudinal axis. In particular, rectilinearly oriented bridge webs and obliquely oriented bridge webs may be combined with one another. While the flow cross-section of the cooling medium may be locally defined on the basis of the number of bridge webs oriented parallel to the chamber longitudinal axis, in order to set the local flow velocity, obliquely oriented bridge webs enable a change of the direction of the cooling medium flow. Overall, the heat removal can thereby be improved.

At least a partial number of the bridge webs have in certain embodiments - when viewed in the sectional area - a rectilinear web shape or a curved or kinking web shape. In particular, at least one of the bridge webs when viewed in the sectional area may be optimised with respect to its flow resistance, for example have a drop profile. A drop profile is distinguished in that it is axially symmetrical with regard to its longitudinal axis, has at its first end in the longitudinal direction a first radius of curvature and at its second end, opposite the first end, in the longitudinal direction has a second radius of curvature which is less than the first radius of curvature. Bridge webs of such configuration are preferably arranged in the cooling channel in such a way that they are subjected to a flow at their first end. Furthermore, it is conceivable that the web shape, when viewed in the sectional area, is polygonal, in particular triangular or quadrangular.

Furthermore, at least a partial number of the bridge webs has, when viewed in the axial longitudinal section through the chamber longitudinal axis, a trapezium-shaped cross-section. Trapezium-shaped herein means a true trapezium shape having two parallel and two non-parallel sides. I.e., a trapezium-shaped cross-section may be herein a cross section of a true trapezium with two parallel and two non-parallel sides. The parallel sides of the trapezium may extend along the sectional area between the casing wall pieces and the bridge webs, and the height of the trapezium may essentially correspond to the distance between the casing wall pieces. Also, when viewed in the axial longitudinal section, edges of the bridge webs arranged upstream or downstream with respect to the flow direction of the cooling medium may extend perpendicularly to the surfaces of the casing wall pieces limiting the cooling channel, or may intersect surfaces of the casing wall pieces limiting the cooling channel at an angle, which is preferably at most 30°.

In certain embodiments, at least a partial number of the bridge elements are produced with the two casing wall pieces in one piece continuously without joints. For example, the casing wall pieces and the bridge elements may be manufactured in an additive layer manufacturing (ALM) method, for example according to the powder-bed method or the powder-nozzle method (in general usage also referred to as 3D printing). The casing wall pieces and the bridge elements consist, for example, of stainless steel and/or an alloy based on nickel (e.g. an alloy marketed under the trade name Inconel). Joints which result from the manufacturing-related joining of initially separately produced components (e.g. weld seams) may be avoided between the bridge elements and the casing wall pieces and also within the bridge elements on use of an ALM manufacturing technology. Complete casing segments, which each have an inner and an outer casing wall piece and a large number of bridge elements therebetween, can thus be produced in 3D printing in one piece. Provided that a sufficiently large 3D printing facility is available, the entire casing construction can be printed in one piece. It is however also possible to assemble the casing construction from a plurality of casing segments each printed, for their part, in one piece. Each of these casing segments may form, for example, a ring-like closed section of the casing construction, so that the individual rings are placed one above the other and welded to one another or otherwise connected to form the casing construction.

The invention is explained in more detail below with the aid of the appended drawings using the example of a rocket engine, in which
- Figure 1: shows a schematic longitudinal sectional view of a rocket engine;
- Figure 2: shows a partial longitudinal sectional view of the casing construction of the rocket engine from Fig. 1 along a sectional plane through the chamber longitudinal axis;
- Figure 3: shows a partial longitudinal sectional view of the casing construction of the rocket engine along the sectional area A-A from Fig. 1; and
- Figure 4: shows a perspective partial view of a portion of the casing construction of the rocket engine from Figure 1.

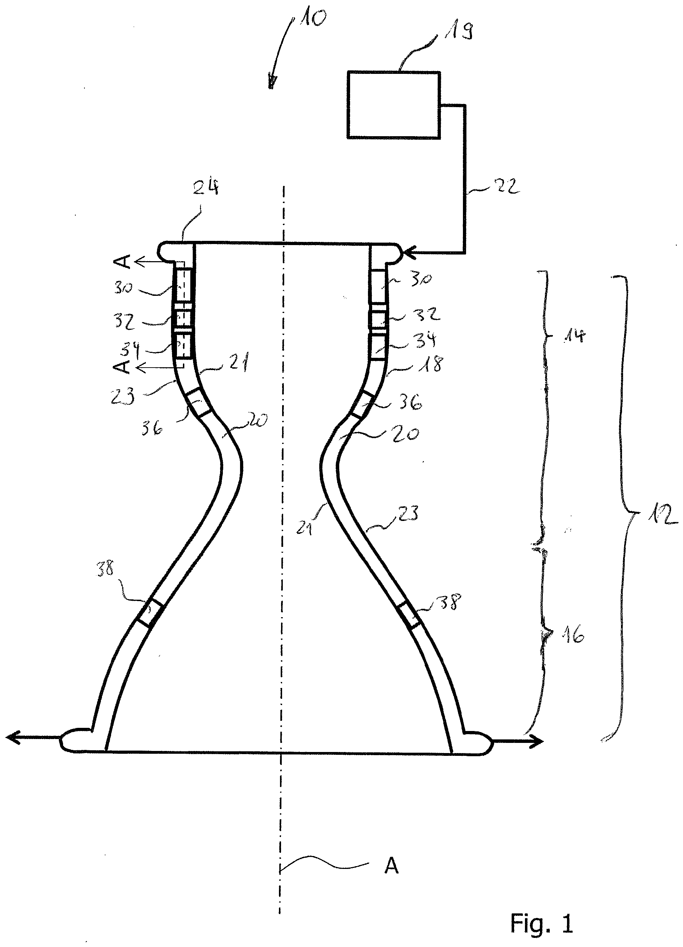

Figure 1 shows rocket engine 10 having a thrust chamber 12 which comprises a combustion chamber 14 and a nozzle 16. The thrust chamber 12 is bounded by a casing construction 18 which extends along a chamber longitudinal axis A. In the casing construction 18 there is formed at least one cooling channel 20 which is in fluidic connection with a source 19 of a cooling medium. The casing construction 18 has casing wall sections 21 and 23 bounding the cooling channel 20 with respect to the axis A radially on the inside and on the outside. In the example shown, the two casing wall sections 21, 23 are formed by annular wall parts arranged concentrically in one another. The cooling channel 20 extends 360 degrees around the chamber longitudinal axis A.

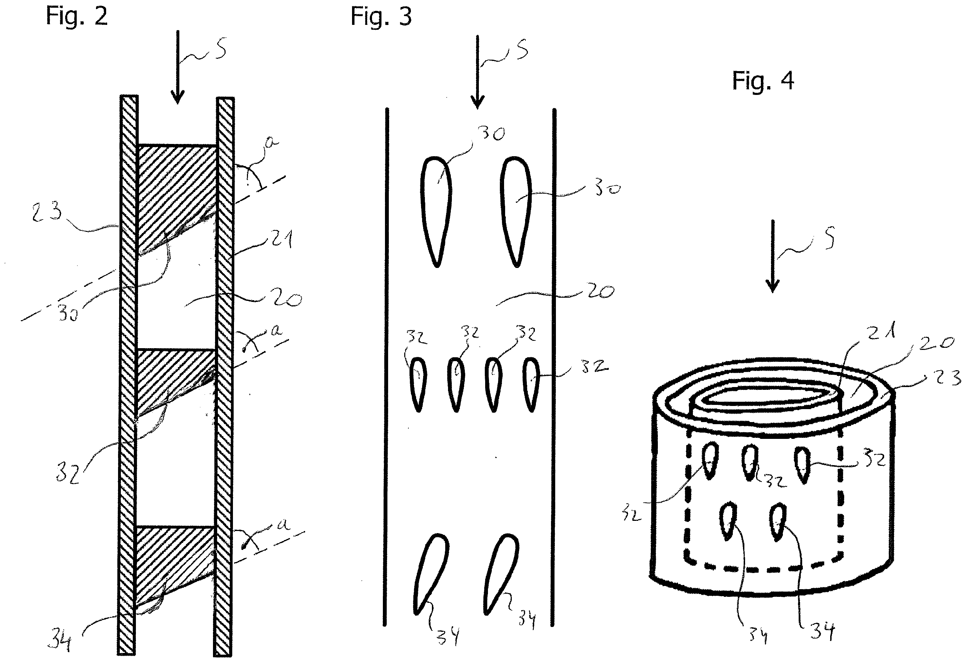

During the operation of the rocket engine 10 the cooling medium is supplied from the source 19 through a supply line 22 and an inlet distributor 24 to the cooling channel 20, into which it flows in flow direction S (cf. Figs. 2 to 4). The casing construction 18 and the cooling channel 20 extend from a first end of the thrust chamber 12 which is opposite the nozzle 16 and faces the inlet distributor 24, to a second end of the thrust chamber 12 which is opposite the first end, at which second end the cooling medium emerges during the operation of the rocket engine from the cooling channel 20 and passes into an outlet line, of no further relevance here. In an alternative it is provided that the inlet distributor 24 is arranged at the second end, the lower end in Fig. 1, of the thrust chamber 12, so that the cooling medium flows in the opposite direction. Components arranged in the cooling channel 20 are then oriented correspondingly oppositely. Furthermore it is conceivable that the cooling channel, seen axially, is situated only in the region of the combustion chamber 14 or only in the region of the nozzle 16. In a further alternative, in which the cooling channel is situated only in the region of the combustion chamber, the inlet distributor 24 is arranged at the interface between the combustion chamber 14 and the nozzle 16. In this alternative, too, the cooling medium flows in the opposite direction, i.e. from the bottom upwards in the representation from Fig. 1, and the components arranged in the cooling channel 20 are oriented oppositely as in the aforementioned alternative.

In the cooling channel 20 there are arranged a plurality of bridge elements formed as bridge webs 30, 32, 34, 36, 38, which each traverse the cooling channel 20 in the radial direction with respect to the chamber longitudinal axis A (cf. Fig. 2). Bridge webs which correspond in their features bear the same reference symbols here. Each of the bridge webs 30, 32, 34, 36, 38 is in direct contact with the casing wall pieces 21, 23 and connects these wall pieces. The two casing wall pieces 21, 23 and the bridge webs 30, 32, 34, 36, 38 are produced in one piece continuously without joints ("in one casting") by printing. The bridge webs 30, 32, 34 and 36 are arranged in the region of the combustion chamber 14 and the bridge web 38 is arranged in the region of the widening of the nozzle 16. If the cooling channel is situated only in the region of the combustion chamber 14 in the case of the alternatives, the bridge webs 38 are absent.

All the bridge webs 30, 32, 34, 36, 38 are of greater length than width when viewed in a sectional area A-A oriented along the casing wall pieces (cf. Fig. 1). In the web longitudinal direction they therefore have a greater dimension than in the web transverse direction. To give a numerical example, the bridge webs 30-38 in the web longitudinal direction may be at most 10 cm or at most 8 cm or at most 6 cm or at most 4 cm long. For example, the dimension of at least a partial number of the bridge webs 30-38 in the web longitudinal direction is at most 3 cm or at most 2 cm or at most 1 cm. In the web transverse direction the bridge webs 30-38 are, for example, at most 3 cm or at most 2 cm or at most 1 cm thick. For example, at least a partial number of the bridge webs 30-38 have a thickness in the web transverse direction between about 1 mm and about 5 mm. The ratio of the length in the web longitudinal direction to thickness in the web transverse direction is, at least in a partial number of the bridge webs 30-38, for example, not less than 1.5:1 or not less than 2:1 or not less than 3:1 or not less than 4:1. The above numerical data applies not only, but in particular also to engines with a combustion chamber diameter of at most about 1 m.

As shown by way of example in the partial axial longitudinal section from Fig. 2, the bridge webs 30-38 are shorter in the web longitudinal direction at their, with respect to the chamber longitudinal axis A, radially outer sides bordering on the casing wall piece 21 than at their radially inner sides bordering on the casing wall piece 23. In this respect, the length of a bridge element or bridge web in this context refers to its maximum extent in its web longitudinal direction. The bridge webs 30-38 have, viewed in the axial longitudinal section through the chamber longitudinal axis A, a trapezium-shaped cross-section, with the parallel sides of the trapezium running along the sectional area between the casing wall pieces 21, 23 and the bridge webs 30-38 and the height of the trapezium corresponding to the distance between the casing wall pieces 21, 23. Herein, trapezium-shaped means shaped like a true trapezium having two essentially parallel and two essentially nonparallel sides / edges (see Fig. 2).

Edges of the bridge webs 30-38 arranged, viewed in the axial longitudinal section, upstream with respect to the flow direction S, run perpendicularly to the surfaces of the casing wall pieces 21, 23 bordering on the cooling channel 20. Viewed in the same section, edges of the bridge webs 30-38 arranged downstream with respect to the flow direction S intersect surfaces of the casing wall pieces 21, 23, bordering the cooling channel 20, at an angle a which is maximally 30 degrees. In alternatives, the angle is maximally 25 degrees or maximally 20 degrees. Furthermore, it is conceivable that the angle is greater than 30 degrees, for example is up to 35 degrees. Alternatively, edges of the bridge webs 30-38 arranged, viewed in the axial longitudinal section, downstream with respect to the flow direction S, run perpendicularly to the surfaces of the casing wall pieces 21, 23 bordering on the cooling channel 20. It is also conceivable that edges of the bridge webs 30-38 arranged upstream with respect to the flow direction S, when viewed in the same axial longitudinal section, intersect surfaces of the casing wall pieces 21, 23, bordering the cooling channel 20, at an angle which is maximally 30 degrees.

Each of the bridge webs 30, 32, 34, 36, 38 has in the sectional area A-A a drop-shaped profile with a gently curved first end and a second end which is more sharply curved than the first end. The bridge webs 30, 32, 34, 36 are oriented in such a way that their first ends point upstream and their second ends point downstream, and around which flows cooling medium at all their surface portions not in contact with the casing wall pieces 21, 23. Both in the circumferential direction of the thrust chamber 12 and in the longitudinal direction parallel to the chamber longitudinal axis A, each of the bridge webs is arranged spaced from the other bridge webs, so that there is no contact between the bridge webs 30, 32, 34, 36, 38 (see Figs. 3 and 4). Moreover, the bridge webs 30, 32, 34, 36 and 38 are arranged spaced from the inlet distributor 24.

Figs. 2 and 3 show, by way of example, that the bridge webs 34 are larger, in particular longer and wider, than the bridge webs 32 and smaller, in particular shorter and narrower, than the bridge webs 30. Accordingly, a smaller number of bridge webs 30 are arranged beside one another in the circumferential direction in a particular region / at a particular height along the axis A than bridge webs 32. As a result, for example in the region of the bridge webs 30, a lower flow velocity is achieved than in the region of the bridge webs 32. Thus, in the region of the bridge webs 32, a greater quantity of heat can pass to the cooling medium than in the region of the bridge webs 30. This applies analogously to the bridge webs 34 and 32.

While the bridge webs 30 and 32 in the sectional area oriented along the casing wall pieces 21, 23 are aligned parallel to one another in such a way that their web longitudinal directions (in Fig. 3 from the top towards the bottom) run parallel to one another and are oriented parallel to the chamber longitudinal axis, the bridge webs 34, although they are aligned parallel to one another, are however oriented obliquely to the bridge webs 30 and 32 and obliquely to the chamber longitudinal axis. In the view from Fig. 3, therefore, the web longitudinal direction of each of the bridge webs 34 intersects the web longitudinal direction of the bridge webs 30, 32. As a result, the flow can be deflected effectively in the circumferential direction.

The bridge webs 36 and 38 are formed in the same way as the bridge webs 30, but may optionally have the features of the bridge webs 32 or 34. Moreover, in an alternative rocket engine, any desired number of further bridge webs may be arranged between the bridge webs 30, 32, 34, 36 and/or 38 which have the features of the bridge webs 30, 32, 34, 36 or 38.

In a further alternative rocket engine (not shown in the figures), the gap between the casing wall pieces 21, 23 is divided by partition walls, extending radially and longitudinally relative to the chamber longitudinal axis A, into a plurality of cooling channels, for example into three, four or five cooling channels. In this alternative the cooling channels each have the same angular width, i.e. width in the circumferential direction with respect to the axis A.

Overall, the rocket engine described here is distinguished by a more efficient cooling of the thrust chamber. Owing to the configuration described the flow of the cooling medium can be locally and as a whole precisely set and thus the transmission of the waste gas heat improved. In particular, by means of the shaping, arrangement and number of the bridge elements/webs over the circumference and the length of the cooling channel as well as via the relative distance between the casing wall pieces, the flow of the cooling medium can be controlled according to the wishes of the developer. This allows the heat transfer to be controlled. If the rocket engine is manufactured additively, i.e. by means of 3D printing, it is distinguished additionally by a simple and cost-effective production.

## Claims

1. Rocket engine (10) having a thrust chamber (12) bounded by a casing construction (18) with a chamber longitudinal axis (A), wherein the casing construction (18) includes at least one cooling channel (20) adapted to be fluidically connected with a source (19) of a cooling medium,
wherein the cooling channel (20) is traversed by a plurality of bridge elements (30, 32, 34, 36, 38) around which the cooling medium flows and which each extend only over a part, in particular a minor part, of the length of the cooling channel (20) measured along the chamber longitudinal axis (A), and which connect two casing wall pieces (21, 23), bounding the cooling channel (20) on the inside and on the outside of the casing construction (18), to one another,
wherein the two casing wall pieces (21, 23) are formed of annular wall parts arranged concentrically within one another and separated from one another by a radial annular space,
wherein at least a partial number of the bridge elements (30, 32, 34, 36, 38) are implemented as bridge webs which are longer than they are wide when viewed in a sectional area oriented along the casing wall pieces (21, 23),
**characterised in that**
at least a partial number of the bridge webs - when viewed in the sectional area - are oriented with their web longitudinal direction parallel to the chamber longitudinal axis (A), and
**in that** at least a partial number of the bridge webs - when viewed in the sectional area - are oriented with their web longitudinal direction at an acute angle obliquely with respect to the chamber longitudinal axis (A).

2. Rocket engine (10) according to claim 1, wherein at least a partial number of the bridge elements (30, 32, 34, 36, 38) are arranged with - referring to a circumferential direction of the thrust chamber (12) - mutual angular offset in the cooling channel (20).

3. Rocket engine (10) according to claim 1 or 2, wherein at least a partial number of the bridge elements (30, 32, 34, 36, 38) are arranged with - referring to the chamber longitudinal axis (A) - mutual longitudinal offset in the cooling channel (20).

4. Rocket engine (10) according to one of claims 1 to 3, wherein each bridge element (30, 32, 34, 36, 38) has, in flow direction (S) of the cooling medium in the cooling channel (20), an extent which is not more than 20% or not more than 15% or not more than 10% or not more than 5% or not more than 3% or not more than 1% of the length of the cooling channel measured in the flow direction (S).

5. Rocket engine (10) according to one of claims 1 to 4, wherein the cooling channel (20) has in the annular circumferential direction an angular width of at least 30 degrees or at least 60 degrees or at least 72 degrees or at least 90 degrees or at least 120 degrees or at least 150 degrees or at least 180 degrees.

6. Rocket engine (10) according to claim 5, wherein the cooling channel (20) extends over the entire annular circumference.

7. Rocket engine (10) according to one of claims 1 to 6, wherein at least a partial number of the bridge elements are of different shape or/and of different size or all the bridge elements are of the same shape and of the same size.

8. Rocket engine (10) according to one of claims 1 to 7, wherein at least a partial number of the bridge webs - when viewed in the sectional area - have a rectilinear web shape or a curved or kinking web shape.

9. Rocket engine according to one of claims 1 to 8, wherein edges of the bridge webs arranged upstream or downstream relative to the flow direction, when viewed in the axial longitudinal section through the chamber longitudinal axis, run perpendicularly to surfaces of the casing wall pieces bordering on the cooling channel.

10. Rocket engine according to one of claims 1 to 9, wherein the bridge webs have a trapezium-shaped cross-section in the axial longitudinal section through the chamber longitudinal axis.

11. Rocket engine according to one of claims 1 to 10, wherein - when viewed in the sectional area - the length of the bridge webs is measured in parallel to the chamber longitudinal axis and the width of the bridge webs is measured perpendicularly to the chamber longitudinal axis.

12. Rocket engine (10) according to one of claims 1 to 8, wherein at least a partial number of the bridge elements are produced with the two casing wall pieces in one piece continuously without joints.

## Patentansprüche

1. Raketentriebwerk (10) mit einer von einer Mantelkonstruktion (18) begrenzten Schubkammer (12) mit einer Kammerlängsachse (A), wobei die Mantelkonstruktion (18) mindestens einen Kühlkanal (20) enthält, der dazu eingerichtet ist, mit einer Quelle (19) eines Kühlmediums in fluidischer Verbindung zu stehen,
wobei der Kühlkanal (20) von einer Mehrzahl von dem Kühlmedium umströmter, sich jeweils nur über einen Teil, insbesondere einen Minderteil, der entlang der Kammerlängsachse (A) gemessenen Länge des Kühlkanals (20) erstreckender Brückenelemente (30, 32, 34, 36, 38) durchsetzt ist, welche zwei den Kühlkanal (20) innen- und außenseitig begrenzende Mantelwandstücke (21, 23) der Mantelkonstruktion (18) miteinander verbinden,
wobei die beiden Mantelwandstücke (21, 23) von konzentrisch ineinander angeordneten, durch einen radialen Ringraum voneinander getrennten Ringwandteilen gebildet sind,
wobei zumindest eine Teilanzahl der Brückenelemente (30, 32, 34, 36, 38) als Brückenstege ausgeführt ist, welche bei Betrachtung in einer längs der Mantelwandstücke (21, 23) orientierten Schnittfläche länger als breit sind,
**dadurch gekennzeichnet, dass** zumindest eine Teilanzahl der Brückenstege - bei Betrachtung in der Schnittfläche - mit ihrer Steglängsrichtung parallel zur Kammerlängsachse (A) orientiert ist, und
dass zumindest eine Teilanzahl der Brückenstege - bei Betrachtung in der Schnittfläche - mit ihrer Steglängsrichtung unter einem spitzen Winkel schräg zur Kammerlängsachse (A) orientiert ist.

2. Raketentriebwerk (10) nach Anspruch 1, wobei zumindest eine Teilanzahl der Brückenelemente (30, 32, 34, 36, 38) mit - bezogen auf eine Umfangsrichtung der Schubkammer (12) - gegenseitigem Winkelversatz in dem Kühlkanal (20) angeordnet ist.

3. Raketentriebwerk (10) nach Anspruch 1 oder 2, wobei zumindest eine Teilanzahl der Brückenelemente (30, 32, 34, 36, 38) mit - bezogen auf die Kammerlängsachse (A) - gegenseitigem Längsversatz in dem Kühlkanal (20) angeordnet ist.

4. Raketentriebwerk (10) nach einem der Ansprüche 1 bis 3, wobei jedes Brückenelement (30, 32, 34, 36, 38) in Strömungsrichtung (S) des Kühlmediums in dem Kühlkanal (20) eine Ausdehnung besitzt, die nicht mehr als 20% oder nicht mehr als 15% oder nicht mehr als 10% oder nicht mehr als 5% oder nicht mehr als 3% oder nicht mehr als 1 % der in der Strömungsrichtung (S) gemessenen Länge des Kühlkanals beträgt.

5. Raketentriebwerk (10) nach einem der Ansprüche 1 bis 4, wobei der Kühlkanal (20) in der Ringumfangsrichtung eine Winkelbreite von mindestens 30 Grad oder mindestens 60 Grad oder mindestens 72 Grad oder mindestens 90 Grad oder mindestens 120 Grad oder mindestens 150 Grad oder mindestens 180 Grad besitzt.

6. Raketentriebwerk (10) nach Anspruch 5, wobei sich der Kühlkanal (20) über den vollen Ringumfang erstreckt.

7. Raketentriebwerk (10) nach einem der Ansprüche 1 bis 6, wobei zumindest eine Teilanzahl der Brückenelemente gestalt- oder/und größenverschieden ist oder alle Brückenelemente gestalt- und größengleich sind.

8. Raketentriebwerk (10) nach einem der Ansprüche 1 bis 7, wobei zumindest eine Teilanzahl der Brückenstege - bei Betrachtung in der Schnittfläche - eine geradlinige Stegform oder eine gebogene oder abknickende Stegform besitzt.

9. Raketentriebwerk nach einem der Ansprüche 1 bis 8, wobei stromaufwärts oder stromabwärts bezüglich der Strömungsrichtung angeordnete Kanten der Brückenstege bei Betrachtung im Axiallängsschnitt durch die Kammerlängsachse senkrecht zu Oberflächen der an den Kühlkanal angrenzenden Mantelwandstücke verlaufen.

10. Raketentriebwerk nach einem der Ansprüche 1 bis 9, wobei die Brückenstege im Axiallängsschnitt durch die Kammerlängsachse einen trapezförmigen Querschnitt aufweisen.

11. Raketentriebwerk nach einem der Ansprüche 1 bis 10, wobei - bei Betrachtung in der Schnittfläche - die Länge der Brückenstege parallel zur Kammerlängsachse und die Breite der Brückenstege senkrecht zur Kammerlängsachse gemessen ist.

12. Raketentriebwerk (10) nach einem der Ansprüche 1 bis 8, wobei zumindest eine Teilanzahl der Brückenelemente mit den beiden Mantelwandstücken einstückig zusammenhängend ohne Fügestellen hergestellt ist.

## Revendications

1. Moteur de fusée (10) comportant une chambre de poussée (12) délimitée par une construction de carter (18) avec un axe longitudinal de chambre (A), dans lequel la construction de carter (18) comprend au moins un canal de refroidissement (20) conçu pour être connecté de manière fluidique à une source (19) d'un fluide de refroidissement,
dans lequel le canal de refroidissement (20) est traversé par une pluralité d'éléments de pontage (30, 32, 34, 36, 38) autour desquels circule le fluide de refroidissement et qui ne s'étendent chacun que sur une partie, en particulier une partie mineure, de la longueur du canal de refroidissement (20) mesurée le long de l'axe longitudinal de la chambre (A), et qui relient deux pièces de paroi de carter (21, 23), délimitant le canal de refroidissement (20) à l'intérieur et à l'extérieur de la construction de carter (18), l'une à l'autre,
dans lequel les deux pièces de paroi de carter (21, 23) sont formées de pièces de paroi annulaires agencées de manière concentrique l'une dans l'autre et séparées l'une de l'autre par un espace annulaire radial,
dans lequel au moins un nombre partiel des éléments de pontage (30, 32, 34, 36, 38) sont mis en oeuvre sous forme d'âmes de pont qui sont plus longues que larges lorsqu'elles sont vues dans une zone en coupe orientée le long des pièces de paroi de carter (21, 23),
**caractérisé en ce qu'**au moins un nombre partiel des âmes de pont - lorsqu'elles sont vues dans la zone en coupe - sont orientées avec leur direction longitudinale d'âme parallèle à l'axe longitudinal de la chambre (A), et
**en ce qu'**au moins un nombre partiel des âmes de pont -lorsqu'elles sont vues dans la zone en coupe - sont orientées avec leur direction longitudinale d'âme selon un angle aigu obliquement par rapport à l'axe longitudinal de la chambre (A).

2. Moteur de fusée (10) selon la revendication 1, dans lequel au moins un nombre partiel des éléments de pontage (30, 32, 34, 36, 38) sont agencés avec - en se référant à une direction circonférentielle de la chambre de poussée (12) - un décalage angulaire mutuel dans le canal de refroidissement (20).

3. Moteur de fusée (10) selon la revendication 1 ou 2, dans lequel au moins un nombre partiel des éléments de pontage (30, 32, 34, 36, 38) sont agencés avec - en se référant à l'axe longitudinal de la chambre (A) - un décalage longitudinal mutuel dans le canal de refroidissement (20).

4. Moteur de fusée (10) selon l'une des revendications 1 à 3, dans lequel chaque élément de pontage (30, 32, 34, 36, 38) présente, dans la direction d'écoulement (S) du fluide de refroidissement dans le canal de refroidissement (20), une étendue qui ne dépasse pas 20 % ou pas plus de 15 % ou pas plus de 10 % ou pas plus de 5 % ou pas plus de 3 % ou pas plus de 1 % de la longueur du canal de refroidissement mesurée dans la direction d'écoulement (5).

5. Moteur de fusée (10) selon l'une des revendications 1 à 4, dans lequel le canal de refroidissement (20) présente dans la direction circonférentielle annulaire une largeur angulaire d'au moins 30 degrés ou d'au moins 60 degrés ou d'au moins 72 degrés ou d'au moins 90 degrés ou d'au moins 120 degrés ou d'au moins 150 degrés ou d'au moins 180 degrés.

6. Moteur de fusée (10) selon la revendication 5, dans lequel le canal de refroidissement (20) s'étend sur toute la circonférence annulaire.

7. Moteur de fusée (10) selon l'une des revendications 1 à 6, dans lequel au moins un nombre partiel des éléments de pontage sont de forme différente ou/et de taille différente ou tous les éléments de pontage sont de la même forme et de la même taille.

8. Moteur de fusée (10) selon l'une des revendications 1 à 7, dans lequel au moins un nombre partiel des âmes de pont -lorsqu'elles sont vues dans la zone en coupe - présentent une forme d'âme rectiligne ou une forme d'âme courbe ou en vrille.

9. Moteur de fusée selon l'une des revendications 1 à 8, dans lequel les arêtes des âmes de pont agencées en amont ou en aval par rapport à la direction d'écoulement, lorsqu'elles sont vues dans la coupe longitudinale axiale à travers l'axe longitudinal de la chambre, s'étendent perpendiculairement aux surfaces des pièces de paroi de carter bordant le canal de refroidissement.

10. Moteur de fusée selon l'une des revendications 1 à 9, dans lequel les âmes de pont ont une section transversale en forme de trapèze dans la coupe longitudinale axiale à travers l'axe longitudinal de la chambre.

11. Moteur de fusée selon l'une des revendications 1 à 10, dans lequel - lorsqu'elles sont vues dans la zone en coupe - la longueur des âmes de pont est mesurée parallèlement à l'axe longitudinal de la chambre et la largeur des âmes de pont est mesurée perpendiculairement à l'axe longitudinal de la chambre.

12. Moteur de fusée (10) selon l'une des revendications 1 à 8, dans lequel au moins un nombre partiel des éléments de pontage sont produits avec les deux pièces de paroi de carter d'un seul tenant en continu, sans joints.
